# EUROPEAN PATENT SPECIFICATION

(11) **EP 4 056 666 B1**
(45) Date of publication and mention of the grant of the patent: **01.11.2023**
(21) Application number: 22161023.1
(22) Date of filing: 09.03.2022
(51) Int. Cl.: C09K 11/06, H01B 1/02, H01B 3/00, G01N 21/64, G01N 21/91, H01R 13/03

(54) **ELECTRICAL TERMINAL WITH PASSIVATION LAYER**
ELEKTRISCHER ANSCHLUSS MIT PASSIVIERUNGSSCHICHT
BORNE ÉLECTRIQUE AVEC COUCHE DE PASSIVATION

(30) Priority: 11.03.2021 GB 202103380
(43) Date of publication of application: 14.09.2022
(73) Proprietor: Aptiv Technologies Limited, St. Michael (BB)
(72) Inventor: PORTE, Maxime, 90471 Nuremberg (DE)
(74) Representative: Murgitroyd & Company

(56) References cited:
- KR-A- 20120 000 974
- WHITE L. K. ET AL: "The Detection of Corrosion Phenomena with pH-Sensitive Fluorescent Dyes on Aluminum- and Gold-Metallized IC Devices", JOURNAL OF THE ELECTROCHEMICAL SOCIETY , vol. 128, no. 5 1 May 1981 (1981-05-01), pages 953-956, XP055856830, ISSN: 0013-4651, DOI: 10.1149/1.2127581 Retrieved from the Internet: URL:https://citeseerx.ist.psu.edu/viewdoc/ download?doi=10.1.1.852.9517&rep=rep1&type =pdf

## Description

### Field of invention

The present invention relates to an electrical contact and in particular, although not exclusively, to an electrically conductive plating on an electrical terminal that is configured to fluoresce as a means of identifying the plating.

### Background

Electrical connectors are typically formed from a base substrate material that is coated with a high conductivity layer to enable contacts to be mated with minimised contact resistance. Example electrical contacts include conductive pins insertable within backplates and male and female push-fit contacts to couple electronic components and/or circuits. Typical electrically conducting plating materials include copper, gold, nickel, silver and alloys thereof.

Silver as a contact plating provides high conductivity and ductility to allow the connectors to compress together when mated. This maximises the contact area and minimises contact resistance. Silver is also easy to solder. However, silver connectors, unlike other metals such as gold, tends to tarnish in air. Other plating materials may oxidise or can be susceptible to environmental degradation that may affect the conductivity, connection interface or integrity. Accordingly, it is known to apply protective films or layers over the conducting layer to prevent corrosion and/or wear. For example, a lubricating oil may be applied to gold plating for wear resistance. Surfactant based coatings have also been proposed in an attempt to provide protection against corrosive environments and to maintain low contact resistance.

US 6,627,329 describes an electrical connector having a plated material protected by a bonding layer of an organic substance and a lubricating layer formed on the bonding layer. The organic substance is capable of combining chemically with the plating layer.

KR 2012 0000974 A discloses a light emitting device with an electrode in contact with a passivation layer which comprises a fluorescent substance.

However, it is difficult to differentiate and identify the various types of electrical connectors and contacts in-situ. In particular, it is often problematic for personnel to identify if a contact is coated with, for example, high conductivity silver or is simply a uncoated material such as tin. This can lead to manufactured terminals to be identified incorrectly, which causes connection performance issues when the terminals are installed in the field. Accordingly, what is required is improved electrical connectors and contacts that address these problems.

### Summary of the Invention

It is an objective of the present disclosure to provide an electrical connector having high electrical conductivity, low contact resistance as well as a resistance to environmental effects, wear and tarnishing. It is a further specific objective to provide a coating for an electrical connector that is readily identifiable, preferably optically, to allow optical/visual inspection of a coated substrate to confirm the presence of a type or class of protective passivation layer, such as fundamental material composition. The electrical connector may be a male or female electrical terminal.

It is a further specific objective to provide a metal passivation layer configured to enable optical/visual identification by fluorescence to confirm the presence and/or material type of the passivation layer on the substrate.

It is a yet further objective to provide an optical inspection apparatus, system and method enabling the inspection of electrical contacts to confirm the presence and/or a physical, mechanical or chemical characteristic of the passivation layer.

The objectives are achieved via a coating layer applied to an electrical terminal that incorporates a fluorophore component or compound at a protective passivation film that, in turn, provides a protective characteristic to an underlying metallic conductive layer applied to a substrate.

The fluorophore may be provided at a polar organic passivation film via any one or a combination of mechanisms including but not limited to entrapment, tethering, entanglement, covalent/chemical bonding, and/or electrostatic bonding such as ionic or Van der Waals interactions.

According to the present disclosure, the polar organic passivation film may be provided at the substrate via any one or a combination of mechanisms including but not limited to absorption at the metallic conductive layer, chemical bonding with the metallic conductive layer, cross linking with the metallic conductive layer or electrostatic bonding to the metallic conductive layer (ionic or Van der Waals interactions).

The present disclosure also provides an optical/visual inspection system including apparatus and method for the inspection of electrical terminals to determine any one or a combination of characteristics of the electrical terminals including in particular the presence of a metallic conductive layer, a type of metallic conductive layer, the presence or type of an organic passivation film, and a thickness or density of an organic passivation film.

According to the invention as disclosed in claim 1 there is provided a male or female electrical terminal comprising: a substrate; a metallic conductive layer provided on the substrate; an organic passivation film provided on the metallic conductive layer; and a fluorophore provided at the passivation layer.

Optionally, the organic passivation film comprises a compound having an organic tail and a polar or ionic head group. Optionally, the organic tail comprises a linear, branched, substituted or unsubstituted alkyl or phenyl group. Optionally, the polar or ionic head group comprises any one or a combination of at least one of: a sulphate, a sulfonate, sulphide, a disulphide, an alkyl sulphide, a dialkyl sulphide, a sulfhydryl group, a phosphate, a carboxylate, a carboxyl, a phenolic, an epoxy, an amine, an imine oxide, an ether, an ester, an ethoxylate, a glycerol, a hydroxyl or polyhydroxy.

Preferably, the compound comprises a C₅-C₃₀ saturated or unsaturated alkyl chain and a polar head group comprising a sulfhydryl group. Preferably the compound comprises a thiol. Optionally, the compound comprises C₁₆-C₂₂ saturated linear alkyl chain and a polar head group comprising a sulfhydryl group (i.e., a thiol compound).

Preferably, the organic passivation film comprises a monomolecular thickness. Optionally, the organic passivation film comprises a bimolecular or multimolecular thickness. Optionally, the fluorophore comprises any one or a combination of at least one of: an organic compound; an inorganic compound; a biological fluorophore; a quantum dot. Optionally, the fluorophore comprises any one or a combination of at least one of: an anthracene derivative; a quinolone or quinoline derivative; a xanthene or xanthene derivative; a pyrene or pyrene derivative.

Optionally, the fluorophore comprises any one or a combination of at least one of fluorescein (resorcinolphthalein) or a fluorescein derivative; rhodamine or a rhodamine derivative such as rhodamine 6G (Rh6G), rhodamine 560 (Rh560), sulforhodamine B (SRhB), rhodamine 640 (Rh640), and fluorescein 548 (F1548); or 8-hydroxypyrene-1,3,6-trisulfonic acid trisodium salt.

Optionally, the metallic conductive layer comprises a metal or metal alloy comprising any one or a combination of at least one of: silver, gold, nickel. Optionally, the substrate comprises any one or a combination of at least one of: copper, a copper alloy, iron, steel, stainless steel.

According to a further aspect of the present disclosure there is provided an optical inspection system for inspecting electrical terminals comprising: an electromagnetic energy source to emit excitation energy towards an electrical terminal as claimed herein; an image capturing device for capturing an image of the excited electrical terminal; and an optical analysis module for analysing the captured image and determining one or more characteristics of the electrical terminal.

Optionally, the one or more characteristics of the electrical terminal may include any one or a combination of: the presence or type of the metallic conductive layer, the presence, type, thickness or density of the polar organic passivation film.

Optionally, the optical inspection system may further comprise any one or a combination of: an electromagnetic energy filter to minimise or eliminate capture of ambient electromagnetic energy and/or electromagnetic energy emitted directly by the electromagnetic energy source; a data storage unit; a user interface; a reference library; a power source; a control unit configured to control any one or a combination of the electromagnetic energy source, the image capturing device, the optical analysis module, the data storage unit, the power source, the user interface or the reference library.

Optionally, the control unit comprises any one or a combination of a control module, a communication module, and a processor.

Optionally, the image capturing device comprises a camera to record an image of the electrical terminal. Optionally, the electromagnetic energy source comprises a lamp configured to emit an excitation energy in a range of 100 nm to 750 nm, 100 nm to 60 nm or 100 nm to 400 nm. The wavelength of the electromagnetic energy source may be determined by a spectrometer or spectral radiometer such as a Thermo Scientific^{™} 201/220 UV visible spectrometer available from Fisher Scientific, UK. Optionally, the electromagnetic energy source comprises a UV lamp. Optionally, the power source further comprises a power source to power the electromagnetic energy source wherein the power source is a battery, a connection socket, a cable and/or a plug for connection to an electricity supply.

Optionally, the inspection system is configured for the automated or part-automated inspection of electrical terminals. Such automation is implemented via the electronic components, architecture and system function in combination with suitable control software as described. Control, intervention and modification of the operational parameters of the inspection system may be implemented locally or remotely via interrogation of the software via the user interface as described.

According to a further aspect of the present disclosure there is provided an optical inspection apparatus for inspecting electrical terminals comprising: an electromagnetic energy source to emit excitation energy towards an electrical terminal to enable visual observation of any fluorescence emitted by the electrical terminal.

### Brief description of drawings

A specific implementation of the present disclosure will now be described, by way of example only, and with reference to the accompanying drawings in which:
Figure 1a is a cross sectional view through an electrical terminal having a substrate, a metallic conductive layer and an organic passivation film according to a specific implementation;
Figure 1b is a perspective view of a male electrical terminal having a substrate, a metallic conductive layer and an organic passivation film according to a specific implementation;
Figure 2 is a magnified cross sectional view of the metallic conductive layer and the passivation film according to the specific implementation; and

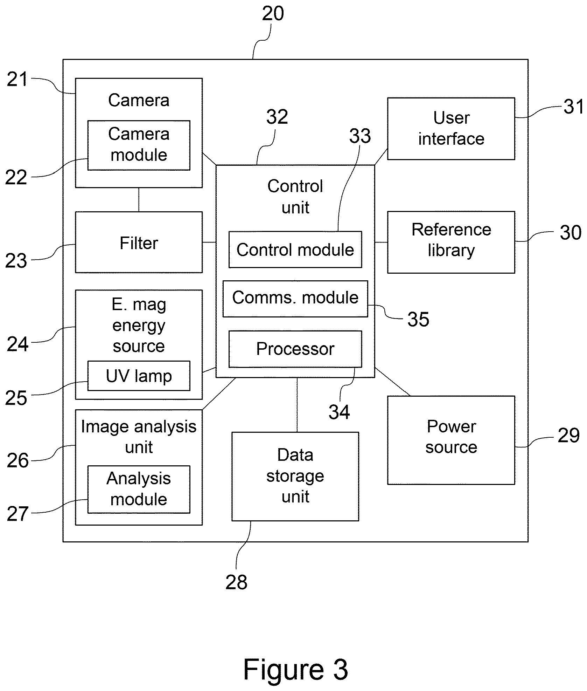

Figure 3 illustrates schematically selected architectural components of an optical inspection system for characterising electrical terminals.

### Detailed description of preferred embodiment of the disclosure

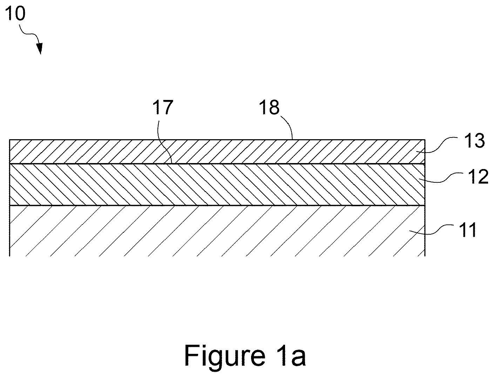

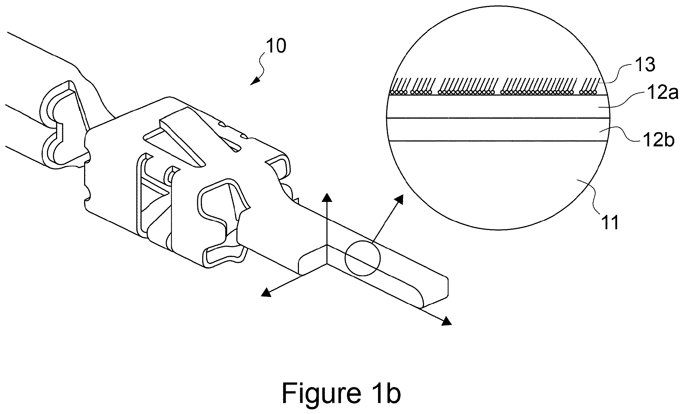

Referring to figure 1a an electrical terminal 10, alternatively termed a contact, comprises a primary metallic body forming a substrate 11. Substrate 11 may be formed from a steel and in particular stainless steel. A silver-plating layer 12 is provided over substrate 11. Silver layer 12, relative to substrate 11 comprises high electrical conductivity and ductility. A passivation film or layer 13 is provided over the silver layer 12. Layer 13 comprises an ionic and/or polar organic compound that both protects the underlying silver layer 12 from environmental degradation. Layer 13 also comprises a friction coefficient being less than that of a silver layer 12 so as to provide wear protection. The electrical terminal 10 may be a male or female electrical terminal. In this regard, Figure 1b is a perspective view of a male electrical terminal 10 having a substrate 11, a first metallic conductive layer 12a, a second metallic conductive layer 12b and an organic passivation film 13 according to an embodiment of the present disclosure. The organic passivation film 13 comprises an ionic and/or polar organic compound that both protects the underlying silver layer 12 from environmental degradation The terminal 10 is optionally a male and/or female connector e.g., push-fit type, that are connectable to provide an electrically conducting junction to establish an electrical conduit or circuit.

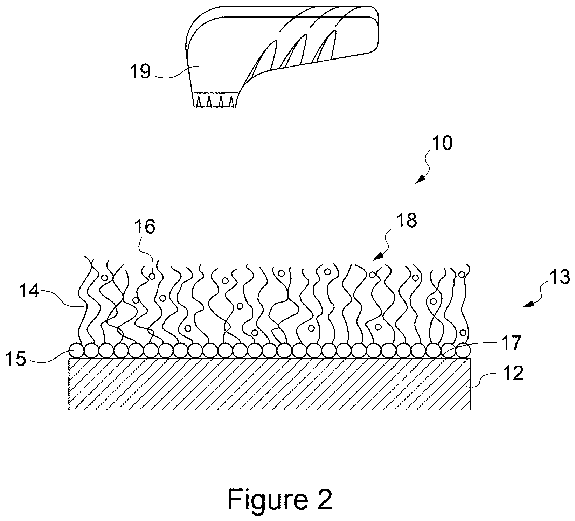

Referring to figure 2, the organic passivation film 13 comprises a compound having a polar or ionic head group 15 and hydrocarbon tail or chain 14 extending from head group 15. Head groups 15 are configured for adsorption at a surface 17 of the electrically conducting layer 12. Depending on the type of head group 15, the adsorption may occur through one or a combination of mechanisms including chemical bonding, crosslinking, electrostatic bonding (ionic or Van der Waals interactions) with the conducting layer 12 at the region of surface 17. Passivation film 13 further comprises a fluorophore 16. Fluorophore 16, according to optional implementations and depending upon the chemical type of the fluorophore 16 and hydrocarbon tail 14, may be retained at the passivation film 13 via any one or a combination of mechanisms including but not limited to entrapment, tethering, entanglement, covalent/chemical bonding and/or electrostatic bonding (ionic or Van der Waals interactions). Preferably, fluorophore 16 is distributed generally homogeneously within passivation film 13 in a plane parallel to surface 17 and/or in a direction perpendicular to surface 17 (in a thickness direction of film 13). Optionally, the fluorophore 16 may be provided at or towards an external surface 18 of film 13 relative to electrically conducting layer 12.

Terminal 10, having the layered configuration as described, is advantageous, via incorporation of the fluorophore 16, to fluoresce in response to incident electromagnetic radiation. Such a radiation, according to the preferred embodiment, comprises UV light generated/emitted from a UV torch 19 having an internal UV lamp (not shown) powered by a battery or other electrical supply (not shown).

The present disclosure also relates to an inspection system 20, being apparatus and method to inspect terminals 10 and to determine any one or a combination of characteristics of the terminal including for example the presence of the metallic conductive layer (silver layer 12), a type of metallic conductive layer, the presence or type of the organic passivation film 13, or a thickness or density of the organic passivation film 13. The system 20 comprises a control unit 32 having a control module 33, a communication module 35 and a processor 34. Modules 33 and 35 may be implemented as software present and operational on an electronic machine control unit (MCU) comprising a conventional architecture including a printed circuit board and associated electronic components as described. System 20 further comprises: an image capturing device implemented as a camera 21 having a camera module 22, also implemented as software and hosted at or independently of the control unit 32; and a filter 23 to prevent or minimise capture of electromagnetic radiation emitted directly from an electromagnetic energy source 24. Filter 23 may also be configured to filter ambient electromagnetic radiation to enable camera 21 to capture images resultant substantially or exclusively from the fluorescence emitted from fluorophore 16 within film 13. System 20 further comprises an image analysis unit 26 having an analysis module, implemented as software and installed and operational locally at the image analysis unit 26. According to further implementations, analysis module 27 may be hosted and operational at control unit 32. Analysis unit 26 via analysis module 27 is configured to analyse images captured by camera 21 and to determine at least one characteristic of the terminal 10 including in particular, a characteristic of passivation film 13 and/or a characteristic of metallic layer 12. Analysis unit 26 may utilise reference library 30 to output a quantitative and/or qualitative output quantifier useful by personnel to identify and/or characterise terminal 10 relative to at least one predefined characteristic (i.e., physical, mechanical, electrical and/or chemical parameters). Control, data input and output at system 20 is managed by a user interacting with the system 20 via a user interface 31 using conventional input means (e.g. a touch screen, keyboard, keypad etc). The power source 29 may comprise a local battery (installed at system 20) or may comprise a socket, terminal or junction to allow coupling of system 20 to a remote power source. System 20 may be implemented as a mobile, handheld device or as a desktop device. If implemented as a desktop device, camera 21 and/or image analysis unit 26 may be movably or remotely coupled to system 20 so as to be positionable in close proximity to a terminal 10 to characterise whilst the majority and remaining components of the system 20 may be located remotely.

In use, system 20 is configured to allow personnel to inspect terminals 10 by emitting electromagnetic energy from UV lamp 25, capturing an image of fluorescence emitted from the fluorophore 16 within layer 13, analysing the image to identify one or more aspects of the terminal 10 and characterise the terminal quantitatively or qualitatively according to predetermined criteria and/or parameters.

Such terminals 10 may be connected to electrical cables via crimping or ultrasonic welding. The electrical cables may be copper or aluminium cables. The terminals 10 may be housed in a connector housing and joined to the electrical cables for connection with other related electrical equipment. Such a joining structure of the electrical cables and the terminals 10 is achieved by joining the electrical cables to the terminals 10 by various methods such ultrasonic welding. By providing a metal passivation layer configured to enable optical/visual identification by fluorescence to confirm the presence and/or material type of the passivation layer on the substrate of the terminals, improved control of an ultrasonic welding process involving the terminals may be achieved.

Specific embodiments of the organic passivation layer 13 are described with reference to the following examples.

### Example 1

A silver-plated substrate was formed by silver plating according to conventional techniques. The dual layer structure was immersed in a previously prepared 5 mM solution of SH-(CH₂)₁₇CH in ethanol for at least 12 hours. Fluorescein was added to the solution prior to immersion of the silver-plated substrate at a concentration in the range 1.0×10⁻² mol/1 to 1.0×10⁻⁷ mol/l (approximately 300 to 700 ppm). During emersion a chemosorption process occurred to form a continuous uninterrupted passivation layer on the metallic conducting layer. After drying in an air or nitrogen atmosphere, the molecules were entrapped within the hydrocarbon tails of the passivation layer via entanglement and Van der Waals interactions.

Unless defined otherwise, all technical and scientific terms used herein have the same meaning as commonly understood to one of ordinary skill in the art to which the presently described subject matter pertains.

Where a range of values is provided, for example, concentration ranges, percentage ranges, or ratio ranges, it is understood that each intervening value, to the tenth of the unit of the lower limit, unless the context clearly dictates otherwise, between the upper and lower limit of that range and any other stated or intervening value in that stated range, is encompassed within the described subject matter. The upper and lower limits of these smaller ranges may independently be included in the smaller ranges, and such embodiments are also encompassed within the described subject matter, subject to any specifically excluded limit in the stated range. Where the stated range includes one or both of the limits, ranges excluding either or both of those included limits are also included in the described subject matter.

It should be understood that the terms "a" and "an" as used above and elsewhere herein refer to "one or more" of the enumerated components. It will be clear to one of ordinary skill in the art that the use of the singular includes the plural unless specifically stated otherwise. Therefore, the terms "a," "an" and "at least one" are used interchangeably in this application.

Unless otherwise indicated, all numbers expressing quantities of ingredients, properties such as size, weight, reaction conditions and so forth used in the specification and claims are to the understood as being modified in all instances by the term "about". Accordingly, unless indicated to the contrary, the numerical parameters set forth in the following specification and attached claims are approximations that may vary depending upon the desired properties sought to be obtained by the present subject matter. At the very least, and not as an attempt to limit the application of the doctrine of equivalents to the scope of the claims, each numerical parameter should at least be construed in light of the number of reported significant digits and by applying ordinary rounding techniques.

Throughout the application, descriptions of various embodiments use "comprising" language; however, it will be understood by one of skill in the art, that in some instances, an embodiment can alternatively be described using the language "consisting essentially of or "consisting of."

## Claims

1. A male or female electrical terminal to form part of an electrically conducting junction to establish an electrical conduit or circuit, comprising:
a substrate;
a metallic conductive layer provided on the substrate;
an organic passivation film provided on the metallic conductive layer; and
a fluorophore provided at the passivation layer.

2. The terminal as claimed in claim 1, wherein the organic passivation film comprises a compound having an organic tail and a polar or ionic head group.

3. The terminal as claimed in claim 2, wherein the organic tail comprises a linear, branched, substituted or unsubstituted alkyl or phenyl group.

4. The terminal as claimed in claim 2 or 3, wherein the polar or ionic head group comprises any one or a combination of at least one of: a sulphate, a sulfonate, sulphide, a disulphide, an alkyl sulphide, a dialkyl sulphide, a sulfhydryl group, a phosphate, a carboxylate, a carboxyl, a phenolic, an epoxy, an amine, an imine oxide, an ether, an ester, an ethoxylate, a glycerol, a hydroxyl or polyhydroxy.

5. The terminal as claimed in claim 2, wherein the compound comprises a C₅-C₃₀ saturated or unsaturated alkyl chain and a polar head group comprising a sulfhydryl group.

6. The terminal as claimed in claim 2, wherein the compound comprises C₁₆-C₂₂ saturated linear alkyl chain and a polar head group comprising a sulfhydryl group.

7. The terminal as claimed in any preceding claim, wherein the organic passivation film comprises a monomolecular thickness.

8. The terminal as claimed in any one of claims 1 to 6, wherein the organic passivation film comprises a bimolecular or multimolecular thickness.

9. The terminal as claimed in any preceding claim, wherein the fluorophore comprises any one or a combination of at least one of:
• an organic compound
• an inorganic compound
• a biological fluorophore
• a quantum dot.

10. The terminal as claimed in any preceding claim, wherein the fluorophore comprises any one or a combination of at least one of:
• an anthracene derivative
• a quinolone or quinoline derivative
• a xanthene or xanthene derivative
• a pyrene or pyrene derivative

11. The terminal as claimed in any one of claims 1 to 10, wherein the fluorophore comprises any one or a combination of at least one of fluorescein or a fluorescein derivative; rhodamine or a rhodamine derivative such as rhodamine 6G (Rh6G), rhodamine 560 (Rh560), sulforhodamine B (SRhB), rhodamine 640 (Rh640), and fluorescein 548 (F1548); or 8-hydroxypyrene-1,3,6-trisulfonic acid trisodium salt.

12. The terminals claimed in any preceding claim, wherein the metallic conductive layer comprises a metal or metal alloy comprising any one or a combination of at least one of: silver, gold, nickel.

13. The terminal as claimed in any preceding claim, wherein the substrate comprises any one or a combination of at least one of: copper, a copper alloy, iron, steel, stainless steel.

14. The terminal as claimed in any preceding claim, wherein the organic passivation film comprises a friction coefficient being less than that of the metallic conductive layer so as to provide wear protection.

## Patentansprüche

1. Ein einzusteckender oder aufnehmender elektrischer Anschluss, um Teil einer elektrisch leitenden Verbindungsstelle zu bilden, um eine elektrische Leitung oder Schaltung einzurichten, der Folgendes beinhaltet:
ein Substrat;
eine metallische leitende Schicht, die auf dem Substrat bereitgestellt ist;
einen organischen Passivierungsfilm, der auf der metallischen leitenden Schicht bereitgestellt ist; und
einen Fluorophor, der an der Passivierungsschicht bereitgestellt ist.

2. Anschluss gemäß Anspruch 1, wobei der organische Passivierungsfilm eine Verbindung beinhaltet, die einen organischen Schwanz und eine polare oder ionische Kopfgruppe beinhaltet.

3. Anschluss gemäß Anspruch 2, wobei der organische Schwanz eine lineare, verzweigte, substituierte oder nichtsubstituierte Alkyl- oder Phenylgruppe beinhaltet.

4. Anschluss gemäß Anspruch 2 oder 3, wobei die polare oder ionische Kopfgruppe ein beliebiges oder eine Kombination von mindestens einem der Folgenden beinhaltet: einem Sulfat, einem Sulfonat, Sulfid, einem Disulfid, einem Alkylsulfid, einem Dialkylsulfid, einer Sulfhydrylgruppe, einem Phosphat, einem Carboxylat, einem Carboxyl, einem Phenolharz, einem Epoxid, einem Amin, einem Iminoxid, einem Ether, einem Ester, einem Ethoxylat, einem Glycerol, einem Hydroxyl oder Polyhydroxy.

5. Anschluss gemäß Anspruch 2, wobei die Verbindung eine gesättigte oder ungesättigte C₅-C₃₀-Alkylkette und eine polare Kopfgruppe, die eine Sulfhydrylgruppe beinhaltet, beinhaltet.

6. Anschluss gemäß Anspruch 2, wobei die Verbindung eine gesättigte lineare C₁₆-C₂₂-Alkylkette und eine polare Kopfgruppe, die eine Sulfhydrylgruppe beinhaltet, beinhaltet.

7. Anschluss gemäß einem der vorhergehenden Ansprüche, wobei der organische Passivierungsfilm eine monomolekulare Dicke beinhaltet.

8. Anschluss gemäß einem der Ansprüche 1 bis 6, wobei der organische Passivierungsfilm eine bimolekulare oder multimolekulare Dicke beinhaltet.

9. Anschluss gemäß einem der vorhergehenden Ansprüche, wobei der Fluorophor ein beliebiges oder eine Kombination von mindestens einem der Folgenden beinhaltet:
• einer organischen Verbindung
• einer anorganischen Verbindung
• einem biologischen Fluorophor
• einem Quantenpunkt.

10. Anschluss gemäß einem der vorhergehenden Ansprüche, wobei der Fluorophor ein beliebiges oder eine Kombination von mindestens einem der Folgenden beinhaltet:
• einem Anthracenderivat
• einem Chinolon oder Chinolinderivat
• einem Xanthen oder Xanthenderivat
• einem Pyren oder Pyrenderivat.

11. Anschluss gemäß einem der Ansprüche 1 bis 10, wobei der Fluorophor ein beliebiges oder eine Kombination von mindestens einem der Folgenden beinhaltet: Fluorescein oder einem Fluoresceinderivat; Rhodamin oder einem Rhodaminderivat wie etwa Rhodamin 6G (Rh6G), Rhodamin 560 (Rh560), Sulforhodamin B (SRhB), Rhodamin 640 (Rh640) und Fluorescein 548 (FI548); oder 8-Hydroxypyren-1,3,6-trisulfonsäuretrinatriumsalz.

12. Anschluss gemäß einem der vorhergehenden Ansprüche, wobei die metallische leitende Schicht ein Metall oder eine Metalllegierung beinhaltet, die ein beliebiges oder eine Kombination von mindestens einem der Folgenden beinhaltet: Silber, Gold, Nickel.

13. Anschluss gemäß einem der vorhergehenden Ansprüche, wobei das Substrat ein beliebiges oder eine Kombination von mindestens einem der Folgenden beinhaltet: Kupfer, einer Kupferlegierung, Eisen, Stahl, rostfreiem Stahl.

14. Anschluss gemäß einem der vorhergehenden Ansprüche, wobei der organische Passivierungsfilm einen Reibungskoeffizienten beinhaltet, der geringer als der der metallischen leitenden Schicht ist, um Verschleißschutz bereitzustellen.

## Revendications

1. Une borne électrique mâle ou femelle destinée à faire partie d'un raccordement électriquement conducteur destiné à établir un conduit ou circuit électrique, comprenant :
un substrat ;
une couche conductrice métallique prévue sur le substrat ;
un film de passivation organique prévu sur la couche conductrice métallique ; et
un fluorophore prévu au niveau de la couche de passivation.

2. La borne telle que revendiquée dans la revendication 1, dans laquelle le film de passivation organique comprend un composé ayant une queue organique et un groupe de tête polaire ou ionique.

3. La borne telle que revendiquée dans la revendication 2, dans laquelle la queue organique comprend un groupe alkyle ou phényle linéaire, ramifié, substitué ou non substitué.

4. La borne telle que revendiquée dans la revendication 2 ou la revendication 3, dans laquelle le groupe de tête polaire ou ionique comprend n'importe quel élément ou une combinaison d'au moins un élément parmi : un sulfate, un sulfonate, un sulfure, un disulfure, un sulfure d'alkyle, un sulfure de dialkyle, un groupe sulfhydryle, un phosphate, un carboxylate, un carboxyle, un phénolique, un époxy, une amine, un oxyde d'imine, un éther, un ester, un éthoxylate, un glycérol, un hydroxyle ou polyhydroxy.

5. La borne telle que revendiquée dans la revendication 2, dans laquelle le composé comprend une chaîne alkyle saturée ou insaturée en C₅ à C₃₀ et un groupe de tête polaire comprenant un groupe sulfhydryle.

6. La borne telle que revendiquée dans la revendication 2, dans laquelle le composé comprend une chaîne alkyle linéaire saturée en C₁₆ à C₂₂ et un groupe de tête polaire comprenant un groupe sulfhydryle.

7. La borne telle que revendiquée dans n'importe quelle revendication précédente, dans laquelle le film de passivation organique présente une épaisseur monomoléculaire.

8. La borne telle que revendiquée dans n'importe laquelle des revendications 1 à 6, dans laquelle le film de passivation organique présente une épaisseur bimoléculaire ou multimoléculaire.

9. La borne telle que revendiquée dans n'importe quelle revendication précédente, dans laquelle le fluorophore comprend n'importe quel élément ou une combinaison d'au moins un élément parmi :
• un composé organique
• un composé inorganique
• un fluorophore biologique
• un point quantique.

10. La borne telle que revendiquée dans n'importe quelle revendication précédente, dans laquelle le fluorophore comprend n'importe quel élément ou une combinaison d'au moins un élément parmi :
• un dérivé d'anthracène
• un dérivé de quinolone ou de quinoléine
• un xanthène ou dérivé de xanthène
• un pyrène ou dérivé de pyrène.

11. La borne telle que revendiquée dans n'importe laquelle des revendications 1 à 10, dans laquelle le fluorophore comprend n'importe quel élément ou une combinaison d'au moins un élément parmi la fluorescéine ou un dérivé de fluorescéine ; la rhodamine ou un dérivé de rhodamine tel que la rhodamine 6G (Rh6G), la rhodamine 560 (Rh560), la sulforhodamine B (SRhB), la rhodamine 640 (Rh640), et la fluorescéine 548 (FI548) ; ou un sel de trisodium d'acide 8-hydroxypyrène-1,3,6-trisulfonique.

12. La borne telle que revendiquée dans n'importe quelle revendication précédente, dans laquelle la couche conductrice métallique comprend un métal ou alliage métallique comprenant n'importe quel élément ou une combinaison d'au moins un élément parmi : l'argent, l'or, le nickel.

13. La borne telle que revendiquée dans n'importe quelle revendication précédente, dans laquelle le substrat comprend n'importe quel élément ou une combinaison d'au moins un élément parmi : le cuivre, un alliage de cuivre, le fer, l'acier, l'acier inoxydable.

14. La borne telle que revendiquée dans n'importe quelle revendication précédente, dans laquelle le film de passivation organique comprend un coefficient de frottement qui est inférieur à celui de la couche conductrice métallique de sorte à fournir une protection contre l'usure.
